# EUROPÄISCHE PATENTSCHRIFT

(11) **EP 2 261 871 B1**
(45) Veröffentlichungstag und Bekanntmachung des Hinweises auf die Patenterteilung: **31.10.2012**
(21) Anmeldenummer: 10394004.5
(22) Anmeldetag: 18.03.2010
(51) Int. Cl.: G07D 11/00, G07F 19/00

(54) **Durchführungsschutz**
Feed through protection
Protection d'une traversée de câbles

(30) Priorität: 17.03.2009 DE 102009013751
(43) Veröffentlichungstag der Anmeldung: 15.12.2010
(73) Patentinhaber: Gunnebo Deutschland GmbH, 85716 Unterschleißheim (DE)
(72) Erfinder: Burwick, Stefan, 83558 Maithenbeth (DE)
(74) Vertreter: Lang, Friedrich

(56) Entgegenhaltungen:
- EP-A2- 0 645 741
- DE-A1- 4 040 379
- DE-A1-102006 006 596
- DE-U1- 29 803 846
- US-A- 1 890 941

## Beschreibung

Die Erfindung betrifft einen Durchführungsschutz gemäß Anspruch 1, ein Wertbehältnis und ein Verfahren gemäß der nebengeordneten Ansprüche.

Aus dem Stand der Technik sind Wertbehältnisse wie Tresore oder Geldautomaten bekannt. Diese Wertbehältnisse weisen mechanische Verriegelungsmechanismen oder elektronisch gesteuerte Verriegelungen auf. Bei mechanischen Verriegelungsmechanismen wird in der Regel eine Antriebswelle eines Kombinationsschlosses durch eine Tür des Wertbehältnisses geführt, sodass an dieser Stelle der Wand eine Durchführung vorgesehen ist. Bei modernen elektronisch gesteuerten Verriegelungsmechanismen müssen Kabel durch eine Wand oder eine Tür hindurchgeführt werden. Auch bei Geldautomaten oder Bank-Service-Terminals mit Geldausgabe-Funktion ist häufig eine Wanddurchführung für Kabel vorgesehen.

Aus DE 40 40 379 A1 ist ein mechanischer Verriegelungsmechanismus bekannt. Eine Vorrichtung zum Durchführen von Kabeln ist von einer Seite über einen Schieber verschließbar. Um bei durchgeführtem Kabel einen vollständigen Verschluss der Durchführung zu erreichen, weisen insbesondere der Schieber und eine diesem gegenüberliegende Seitenkante der Durchführung elastische Dichtlippen auf, die bei geschlossenem Schieber das Kabel umschließen. Über einen Federmechanismus wird dabei der Schieber gegen die gegenüberliegende Seitenkante gedrängt und arretiert.

US 1,890,941 A beschreibt ein Wertbehältnis, bei welchem bei unbefugtem Einwirken oder Zerstören auf die Klappe des Wertbehältnisses ein Alarmsignal als Schutzmechanismus ertönt. Wird durch Entfernen der Klappe oder gewaltsames Einwirken auf diese ein Kabel aus der dazugehörigen Durchführung entfernt oder verschoben, wird der Kontakt eines elektrischen Kreises geschlossen, der ein Alarmsignal zur Folge hat.

Durchführungen stellen üblicherweise eine Schwachstelle von Wertbehältnissen dar. So können beispielsweise Eingabeeinheiten mit daran befestigten Durchgangskabeln entfernt werden, wobei die Durchgangskabel aus der Durchführung gezogen werden, sodass eine ungeschützte Öffnung entsteht, die der Manipulation des Wertbchältnisses dienen kann. Werden bei mechanischen Verriegelungsmechanismen Riegelgriffe oder Kombinationsweiten mit Gewalt entfernt, entsteht in dem dann frei werdenden Freiraum der Durchführung ein sehr großer Durchbruch zum Innenraum. Dies gilt analog auch für Panzerschläuche von Alarmanlagen oder externer Stromversorgungen sowie Zuleitungen für Geldautomaten.

Eine einmal durch Entfernen des durchgeführten Mediums geöffnete Durchführung kann verwendet werden, um einen Innenraum des Wertbehältnisses, einer Tür des Wertbehältnisses oder allgemein einen Schlossraum auszuspähen oder um über diese Öffnung Werkzeuge, wie Seischlingen oder Haken, einzubringen. Ebenso können die geöffneten Durchführungen zum Einbringen von aggressiven Flüssigkeiten oder Gasen verwendet werden. Weiterhin ist eine Einführung von Sprengstoff denkbar.

Nachteilig am Stand der Technik ist also, dass Durchführungen in den Wänden und Türen von Wertbehältnissen Angriffspunkte für Angriffe auf das Wertbehältnis darstellen.

Aufgabe der Erfindung ist es, die Nachteile des oben beschriebenen Standes der Technik zu beheben oder abzumildern, insbesondere ist es Aufgabe der Erfindung, Angriffe auf Wertbehältnisse unter Ausnutzung von Durchführungen in Wänden oder Türen der Wertbehältnisse zu erschweren.

Die Aufgabe wird gelöst mit einem Durchführungsschutz nach Anspruch 1, einem Wertbehältnis und einem Verfahren zum Schützen eines Wertbehältnisses nach den nebengeordneten Ansprüchen.

Die Erfindung sieht einen Schutz von Durchführungen von Wertbehältnissen vor. Die Erfindung ist vorteilhaft einsetzbar bei, aber nicht beschränkt auf, Tresorraumtüren, Panzergeldschränke, Geldautomaten, Datensicherungssafes, Gas- und Brandschutztüren und ähnliche Tresore oder Türen. Mit der Bezeichnung "Durchführung" werden dabei Öffnungen in Türblättern, Wänden oder Türrahmen dieser Wertbehältnisse bezeichnet, die beim gewöhnlichen Gebrauch des Wertbehältnisses der dauerhaften Durchführung eines Durchführmediums dienen. Als solche Durchführmedien kommen beispielsweise Wellen, insbesondere Kombinationseellen, Riegelgriffe oder Kabel bzw. Panzerschläuche mit Kabeln in Betracht.

Die Erfindung sieht vor, dass die Durchführung mit einem Sperrelement geschützt wird, das mindestens zwei Positionen einnehmen kann, nämlich eine Aufbewahrungsposition und eine Sperrposition. In der Sperrposition sperrt, das Sperrelement die Durchführung, sodass eine Manipulation unter Ausnutzung der Durchführung erschwert ist. In der Durchführung ist ein Durchführungsmedium angeordnet, an welchem das Sperrelement in der Aufbewahrungsposition in der Weise anliegt, dass das Sperrelement in Richtung der Sperrposition vorgespannt ist. Allgemein bietet die Erfindung den Vorteil eines besseren Schutzes des Wertbehältnisses, insbesondere eines besseren Schutzes vor Manipulationen des Wertbehältnisses unter Ausnutzung einer Durchführung des Wertbehältnisses.

Vorteilhafte Ausführungsformen der Erfindung sehen eine Verriegelung vor, welche das Sperrelement in der Sperrposition verriegelt. Auf diese Weise wird eine Entfernung des Sperrelements aus der Sperrposition verhindert. Bevorzugt umfassen die Verriegelung oder das Sperrelement kantige oder runde Bolzen, welche aus einer Ausgangsstellung oder Aufbewahrungsposition in die Sperrposition bzw. in eine Verriegelungslage zur Verriegelung des Sperrelementes verschiebbar sind. Mit dem Sperrelement und der Verriegelung bieten typische Ausführungsformen eine doppelte Sicherung: zunächst wird die Durchführung mit dem Sperrelement versperrt und außerdem wird das Sperrelement in dieser Position, d.h. der Sperrposition, durch die Verriegelung gesichert.

Vorzugsweise ist die Verriegelung verschiebbar und in Richtung einer Verriegelungslage zum Verriegeln des Sperrelements vorgespannt. Auf diese Weise wird die Verriegelung zuverlässig in die Verriegelungslage verschoben oder in der Verriegelungslage gehalten. Die Verriegelungslage ist die Position der Verriegelung, bei welcher die Versiegelung das Sperrelement in der Sperrposition verriegelt. Vorteilhafterweise wird die Verriegelung hierzu in einer Führung geführt oder mit einer Feder vorgespannt. Es ist auch möglich, die Verriegelung lediglich durch ihr Eigengewicht vorzuspannen, wobei "vorspannen" im weitesten Sinne zu verstehen ist. Dies bietet den Vorteil, dass auf die Feder verzichtet werden kann. Die Feder bietet den Vorteil, dass auch eine Lageänderung des Wertbehältnisses grundsätzlich nichts an der Vorspannung ändert, sodass die Vorspannung in Richtung der Verriegelungslage auch bei einer Lageänderung des Wertbehältnisses durch Kippen zuverlässig aufrechterhalten wird.

Vorzugsweise ist das Sperrelement von der Aufbewahrungsposition in die Sperrposition verschiebbar und in Richtung der Sperrposition vorgespannt. Besondere Vorteile bieten Ausführungsformen, bei denen das Sperrelement in der Aufbewahrungsposition gegen ein durch die Durchführung durchgeführter Durchführmedium vorgespannt ist, sodass bei Entfernen des Durchführmediums das Sperrelement angetrieben durch die Vorspannung selbsttätig in die Sperrposition übergeht. Analog kann vorteilhafterweise auch die Verriegelung gegen das Sperrelement vorgespannt werden, sodass bei einer Bewegung des Sperrelements von der Aufbewahrungsposition in die Sperrposition es automatisch zu einer Bewegung der Verriegelung unter Antrieb der Vorspannung der Verriegelung in die Verriegelungslage kommt. Auf diese Weise ist sichergestellt, dass ohne weitere Sensoren, Antriebe oder Stellmechanismen bei Entfernen eines Durchführmediums aus der Durchführung zuverlässig der Durchführungsschutz aktiviert wird, indem das Sperrelement in die Sperrposition gelangt und dort verriegelt wird.

Ausführungsformen, bei denen ein Auslösemechanismus vorgesehen ist, der bei Feststellen einer Manipulation einen Übergang des Sperrelements von der Aufbewahrungsposition in die Sperrposition auslöst, bieten den Vorteil dass bei Auftreten einer Manipulation die Durchführung wirksam geschützt wird. Auch die oben beschriebene Vorspannung des Sperrelements gegen ein Durchführmedium fällt unter den Begriff Auslösemechanismus. Unter den Begriff Auslösemechanismus fallen jedoch auch andere mechanische oder elektromechanische Vorrichtungen, beispielsweise Einrichtungen, welche durch elektromagnetische Wechselwirkung das Sperrelement in der Aufbewahrungsposition halten und bei Auslösung das Sperrelement freigeben, sodass es in die Sperrposition gelangt. Solche Einrichtungen bieten den Vorteil, dass auch bei einer anderweitig an dem Wertbehältnis festgestellten Manipulation, beispielsweise starken Erschütterungen, das Sperrelement in die Sperrposition gebracht werden kann, wobei es in diesem Fall zu einem Zerstören von Kabel, welche durch die Durchführung durchgeführt sind, kommen kann.

Vorteilhafterweise ist auf der Innenseite einer Wand, durch welche die Durchführung verläuft, eine Abstützung angeordnet, die als Widerlager für das Sperrelement in der Sperrposition dient. Die Abstützung kann vorteilhaft gleichzeitig als Führung für das Sperrelement verwendet werden. Die Abstützung bietet den Vorteil, dass das Sperrelement nicht durch einfache Schlageinwirkung aus der Sperrposition gewaltsam entfernt werden kann.

Bei typischen Ausführungsformen der Erfindung dichtet das Sperrelement die Durchführung in der Sperrposition im Wesentlichen luftdicht ab. Besonders bevorzugt wird, dass die Durchführung in der Sperrposition des Sperrelements fluiddicht verschlossen wird. Dies bietet den Vorteil eines Schuhes gegenüber aggressiven Gasen oder Flüssigkeiten. Vorteilhafterweise umfasst die Dichtung daher wider-standsfähige Materialien, beispielsweise zwei plangeschliffene Metalloberflächen aus Stahl oder Keramikdichtflächen, welche abdichtend aufeinander liegen.

Ein Wertbehältnis mit einer Durchführung und einem Durchführungsschutz in einer der oben beschriebenen bevorzugten Ausführungsarten ist ein weiterer unabhängiger Gegenstand der Erfindung. Vorzugsweise umfasst das Wertbehältnis eine Alarmvorrichtung, die bei einer. Bewegung des Sperrelements von der Aufbewahrungsposition in die Sperrposition eine Notverriegelung einer verschließbaren Öffnung des Wertbehältnisses auslöst. Dabei ist mit verschließbarer Öffnung beispielhaft eine Tür eines Tresors oder Geldschranks gemeint. Falls das Wertbehältnis ein Tresorraum mit Tresortür ist, stellt die Tresortür die verschließbare Öffnung dar. Wiederum wird angemerkt, dass die Durchführung in einer Wand oder auch in der Tür eines Wertbehältnisses angeordnet sein kann. Eine solchermaßen automatisch ausgelöste Notverriegelung bietet einen verbesserten Schutz des Wertbehältnisses. Bei typischen Ausführungsformen der Erfindung wird ein Kabel oder eine Welle als Durchführungsmedium durch die Durchführung geführt.

Ein Verfahren zum Schützen eines Wertbehältnisses mit einer Durchführung und einem in der Durchführung angeordneten Durchführmedium ist ein weiterer unabhängiger Gegenstand der Erfindung und sieht eine Überprüfung, ob das Durchführmedium aus der Durchführung entfernt wird, vor. Vorzugsweise findet eine solche Überprüfung laufend statt. Bei dem oben beschriebenen Beispiel eines gegen das Durchführmedium vorgespannten Sperrelements wird ohnehin kontruktionsbedingt automatisch laufend überprüft, ob das Durchführmedium noch an Ort und Stelle ist. Bei anderen bevorzugten Ausführungsformen wird eine solche Überprüfung mittels Sensoren vorgenommen, beispielsweise mittels elektromagnetischer oder optischer Sensoren. Erfindungsgemäß wird bei Feststellung, dass das Durchführungsmedium entfernt wird, ein Sperrelement ausgelöst, sodass das Sperrelement von einer Aufbewahrungsposition in eine Sperrposition zum Sperren der Durchführung übergeht. Auf diese Weise wird ein verbesserter Schutz der Durchführung gewahrleistet.

Bei bevorzugten Ausführungsformen des erfindungsgemäßen Verfahrens wird eine Notverriegelung einer verschließbaren Öffnung des Wertbehältnisses ausgelöst bei der Feststellung, dass das Durchführmedium entfernt wird. Auf diese Weise wird das gesamte Wertbehältnis besser vor Manipulationen geschützt.

Vorzugsweise weist der Durchführungsschutz eine Notsperrvorrichtung auf, die bei einer Bewegung des Sperrelements von der Aufbewahrungsposition in die Sperrposition eine Notverriegelung einer verschließbaren Öffnung des Wertbehältnisses ausführt.

Bei einer weiteren bevorzugten Ausführungsform der Erfindung weist das Wertbehältnis eine Notsperrvorrichtung auf, die bei einer Entnahme des Durchführungsmediums, beispielsweise eines Kabels oder einer Welle, aus der Durchführung eine Notverriegelung einer verschließbare Öffnung (34) des Wertbehältnisses ausführt. Dabei wird die Notverriegelung automatisch ausgeführt.

Nachfolgend wird anhand einiger Zeichnungen ein bevorzugtes Ausführungsbeispiel der Erfindung beschrieben. Dabei zeigen:
- Figur 1: eine schematische Schnittdarstellung eines erfindungsgemäßen Durchführungsschut- zes,
- Figur 2: eine schematische Seitenansicht des in der Figur 1 geschnittenen dargestellten Durchführungsschutzes,
- Figur 3: eine schematische Seitenansicht einer Ausführungsform mit einer Notsperrvorrich- tung, und
- Figur 4: eine schematische Seitenansicht einer weiteren Ausführungsform mit einer Notsperr- vorrichtung.

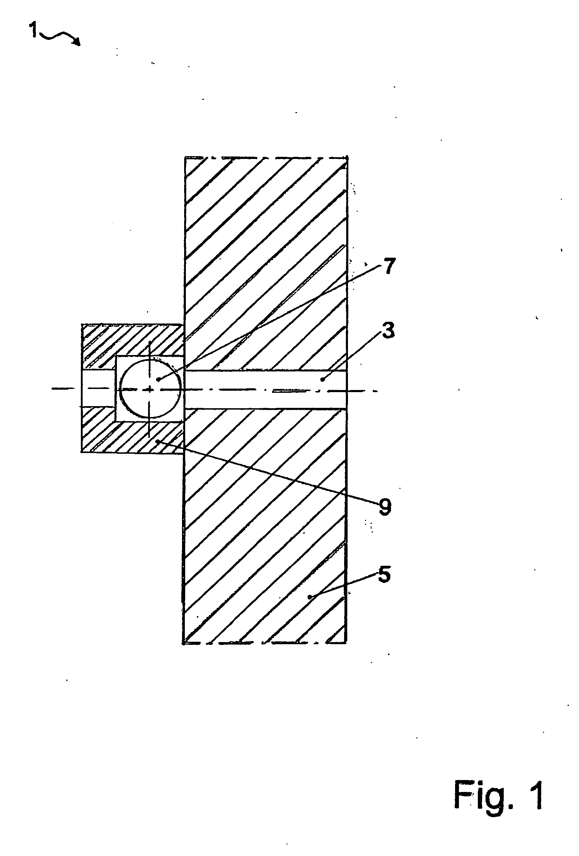

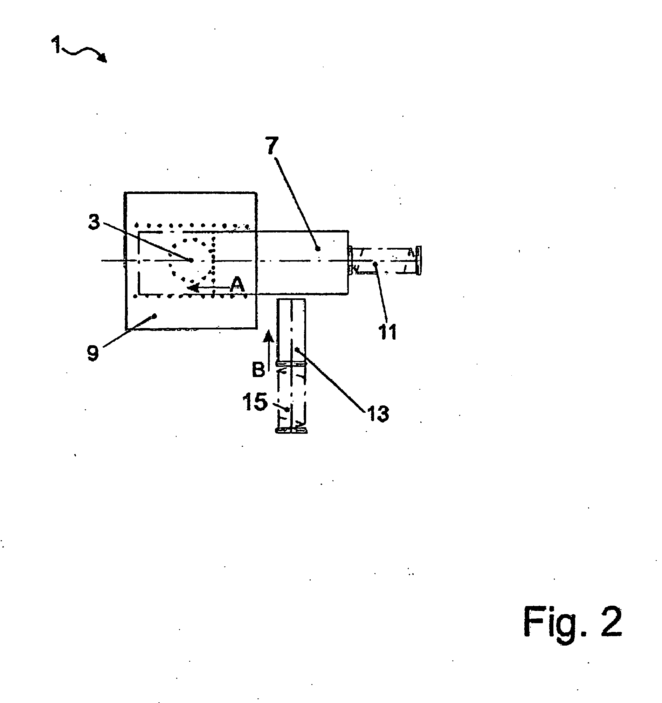

Die Figur 1 zeigt einen Schnitt durch einen erfindungsgemäßen Durchführungsschutz 1. Der Durchführungsschutz 1 schützt eine Durchführung 3, welche dazu dient, ein Kabel (nicht dargestellt) durch eine Wand 5 eines Wertbehältnisses hindurchzuführen. Das Wertbehältnis ist in diesem Fall ein Geldautomat, wobei durch die Durchführung 3 Kabel zur Stromversorgung und Datenleitungen hindurchgeführt werden. Die Durchführung 3 ist durch ein Sperrelement 7 absperrbar. Das Sperrelement: 7 ist ein Rundbolzen, an dem eine spiralförmige Feder (im Zusammenhang mit Fig. 2 später erläutert) angreift. Das Sperrelement 7 ist in einer Aufbewahrungsposition und einer Sperrposition positionierbar. Das Sperrelement 7 stützt sich, falls es in der Sperrposition positioniert ist, gegen eine Abstützung 9 ab. Die Abstützung 9 bildet ein Widerlager für das Sperrelement 7, falls das Sperrelement in der Sperrposition ist.

In der Fig. 2 ist der erfindungsgemäße Durchführungsschutz 1 der Fig. 1 noch einmal in einer Seitenansicht gezeigt, wobei die Seitenansicht der Fig. 2 den Durchführungsschutz 1 aus einer Sichtposition aus dem Behälterinneren auf die Wand 5 (siehe Figur 1) des Wertbehälthisses zeigt. Bei der Beschreibung der Fig. 2 und des dort abgebildeten Durchführungsschutzes 1 wird auf die Beschreibung der Fig. 1 Bezug genommen, wobei für gleiche Teile gleiche Bezugszeichen verwendet werden. Einige Teile sind in der Fig. 2. strichliert dargestellt, da sie in der Ansicht der Fig. 2 verdeckt sind, beispielsweise durch die Abstützung 9.

In der Fig. 2 ist das Sperrelement 7 in der Aufbewahrungsposition gezeigt. Strichliert ist eine Führung des Sperrelements 7 in der Abstützung 9 gezeigt, sodass es bei Anordnung in der Sperrposition innerhalb der Abstützung 9 die Durchführung 3 (ebenfalls strichliert in der Fig. 2 dargestellt) absperrt. Hierzu bewegt sich das Sperrelement in Richtung eines Pfeils A. Angetrieben und vorgespannt wird das Sperrelement 7 durch eine erste Feder 11. Ist das Sperrelement in der Aufbewahrungsposition, so spannt die erste Feder 11 das Sperretement in der Richtung der Sperrposition vor, sodass bei einer Auslösung des Sperrelements, hier durch ein Herausziehen des durchgeführten Kabels (nicht dargestellt), das Sperrelemenl 7 angetrieben durch die erste Felder 11 in die Sperrposition verschoben wird.

Wird das Sperrelement 7 in die Sperrposition verschoben, so gibt das Sperrelement 7 selbst eine Verriegelung 13 frei, die wiederum durch eine zweite Feder 15 vorgespannt ist. Sobald das Sperrelement 7 in der Sperrposition ist, wird die Verriegelung 13 durch die Vorspannung der zweiten Feder 15 in Richtung eines Pfeils B bewegt und verriegelt somit das Sperrelement 7. Damit ist das Sperrelement 7 auch gegen einen Angriff gesichert, bei dem versucht wird, das Sperrelement 7 wieder aus der Sperrposition zurückzuschieben.

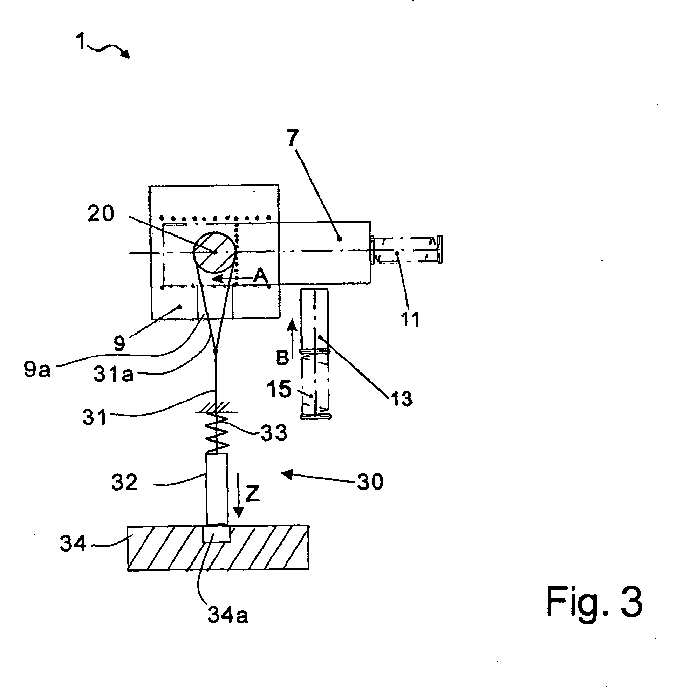

Figur 3 zeigt eine Ausführungsform der Erfindung mit einer Notsperrvorrichtung 30. Die Notsperrvorrichtung 30 umfasst ein Seil 31, vorzugsweise ein Drahtseil, mit einer Schlinge 31a. Die Schwinge 31 ist um das Durchführungsmedium 20 gelegt. An dem Seil 31 ist ein Notriegel 32 befestigt, welcher über eine weitere Feder 33 vorgespannt ist. Wird das Durchführungsmedium 20 aus der Durchführung 3 entnommen, so entfällt die der Federkraft entgegenwirkende Seilkraft, da die Schlinge 31 durch eine untere Öffnung 9a der Abstützung 9 herunterfällt. Damit wird der Notriegel 32 infolge der Federkraft von der Feder 33 in Richtung des Pfeiles Z in eine Ausnehmung 34a einer zu verschließenden Öffnung 34, beispielsweise Tür, Wand etc., bewegt, so dass die Öffnung 34 automatisch verriegelt ist und nur von einer Fachkraft wieder entriegelt werden kann.

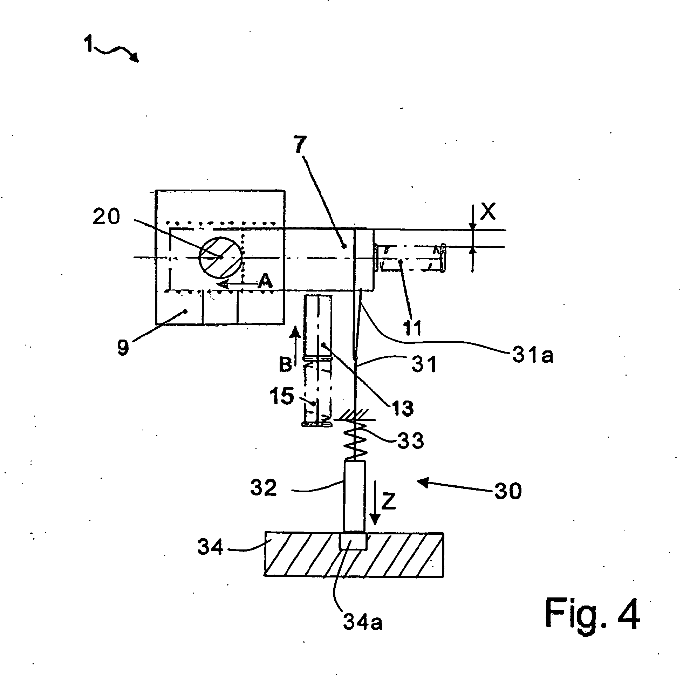

Figur 4 zeigt eine alternative Anordnung der Notsperrvorrichtung 30. Im Unterschied zur Ausführungsform gemäß Figur 3 ist: die Schlinge 31a des Seils 31 um das Sperrelement 7 gelegt. Wird das Sperrelement 7 von der Aufbewahrungsposition in die Sperrposition bewegt, so wird der Notriegel 32 infolge der Federkraft von der Feder 33 um den Betrag X in Richtung des Pfeils Z bewegt. Dies führt zu einer zusätzlichen, effektiven Verriegelung der verschließbaren Öffnung 34 des Wertbehältnisses.

Der besondere Vorteil der Erfindung ist ein Schutz für eine Durchführung in einem Wertbehältnis, die einen Angriff auf das Wertbehältnis unter Ausnutzung der Durchführung wesentlich erschwert. Weitere Vorteile sind, dass das Sperrelement unabhängig von der Lage des Wertbehältnisses auf jeden Fall bei Entfernen des Durchführmediums aus der Durchführung in die Sperrposition durch die Vorspannung der Feder geschoben wird. In dieser Sperrposition wird das Sperrelement dann zuverlässig durch die vorgespannte Verriegelung gehalten, die ebenfalls unabhängig von der Lage des Wertbehältnisses in eine Verriegelungslage gelangt.

Die Erfindung ist nicht auf das vorstehend beschriebene Ausführungsbeispiel beschränkt, der Umfang der Erfindung wird vielmehr durch die Ansprüche bestimmt. Insbesondere ist die Erfindung universell bei verschiedenen Wertbehältnissen, darunter auch Türen von Wertbehältnissen, die immobil in einem Gebäude verbaut sind, einsetzbar. Mit der Erfindung können Durchführungen für verschiedenste Durchführmedien, bspw. Wellen oder Kabel, geschützt werden.

## Patentansprüche

1. Durchführungsschutz (1) für eine Durchführung (3) in einem Wertbehältnis mit einem Sperrelement (7), das in einer Aufbewahrungsposition und einer Sperrposition zum Sperren der Durchführung (3) positionierbar ist, wobei in der Durchführung (3) ein Durchführungsmedium angeordnet ist, an welchem das Sperrelement (7) in der Aufbewahrungsposition in der Weise anliegt, dass das Sperrelement (7) in Richtung der Sperrposition vorgespannt ist, **gekennzeichnet durch** einen Auslösemechanismus, der dazu eingerichtet ist, bei Entfernen eines Durchführmediums aus der Durchführung (3) einen Übergang des Sperrelements (7) von der Aufbewahrungsposition in die Sperrposition auszulösen.

2. Durchführungsschutz (1) nach Anspruch 1, **gekennzeichnet durch** eine Verriegelung (13), die das Sperrelement (7) in der Sperrposition verriegelt.

3. Durchführungsschutz (1) nach Anspruch 2, **dadurch gekennzeichnet, dass** die Verriegelung (13) verschiebbar ist und in Richtung einer Verriegelungslage zum Verriegeln (7) des Sperrelements vorgespannt ist.

4. Durchführungsschutz (1) nach einem der vorhergehenden Ansprüche, **dadurch gekennzeichnet, dass** das Sperrelement (7) von der Aufbewahrungsposition in die Sperrposition verschiebbar ist und in Richtung der Sperrposition vorgespannt ist.

5. Durchführungsschutz (1) nach einem der vorhergehenden Ansprüche, **gekennzeichnet durch** eine Abstützung (9) zur Anordnung auf der Innenseite einer Wand (5) des Wertbehältnisses, wobei die Abstützung (9) als Widerlager für das Sperrelement (7) in der Sperrposition dient.

6. Durchführungsschutz (1) nach einem der vorhergehenden Ansprüche, **dadurch gekennzeichnet, dass** das Sperrelement (7) die Durchführung (3) in der Sperrposition des Sperrelements (7) im Wesentlichen luftdicht verschließt.

7. Durchführungsschutz (1) nach einem der vorhergehenden Ansprüche, **gekennzeichnet durch** eine Notsperrvorrichtung (30), die bei einer Bewegung des Sperrelements (7) von der Aufbewahrungsposition in die Sperrposition eine Notverriegelung einer verschließbaren Öffnung (34) des Wertbehältnisses ausführt.

8. Wertbehältnis mit einer Durchführung (3) und einem Durchführungsschutz (1) nach einem der Ansprüche 1 bis 8.

9. Wertbehältnis nach Anspruch 9, **gekennzeichnet durch** eine Alarmvorrichtung, die bei einer Bewegung des Sperrelements (7) von der Aufbewahrungsposition in die Sperrposition oder bei einer Entnahme des Durchführungsmediums (20) aus der Durchführung (3) eine Notverriegelung einer verschließbaren Öffnung des Wertbehältnisses auslöst.

10. Wertbehältnis nach Anspruch 9 oder 10, **gekennzeichnet durch** eine Notsperrvorrichtung (30), die bei einer Entnahme des Durchführungsmediums (20) aus der Durchführung (3) eine Notverriegelung einer verschließbaren Öffnung (34) des Wertbehältnisses ausführt.

11. Wertbehältnis nach einem der vorhergehenden Ansprüche 9 bis 11, **dadurch gekennzeichnet, dass** das Durchführungsmedium ein Kabel oder eine Welle ist.

12. Verfahren zum Schützen eines Wertbehältnisses mit einer Durchführung (3) mit einem Durchführmedium, **gekennzeichnet durch** die Schritte:
- Überprüfung, ob das Durchführmedium aus der Durchführung (3) entfernt wird,
- bei Feststellung, dass das Durchführmedium entfernt wird, Auslösen eines Sperrelements (7), so dass das Sperrelement (7) von einer Aufbewahrungsposition in eine Sperrposition zum Sperren der Durchführung (3) übergeht.

13. Verfahren nach Anspruch 13, **gekennzeichnet durch** Auslösen einer Notverriegelung einer verschließbaren Öffnung des Wertbehältnisses bei Feststellung, dass das Durchführmedium entfernt wird.

## Claims

1. A leadthrough protection (1) for a leadthrough (3) in a secure storage unit, comprising a locking element (7) which can be positioned in a storage position and a locking position for locking the leadthrough (3), with a leadthrough medium being arranged in the leadthrough (3) on which the locking element (7) rests in the storage position in such a way that the locking element (7) is pretensioned in the direction of the locking position, **characterized by** a trigger mechanism which is set up, when the leadthrough medium is removed from the leadthrough (3), to trigger a transfer of the locking element (7) from the storage position to the locking position.

2. A leadthrough protection (1) according to claim 1, **characterized by** a lock (13) which locks the locking element (7) in the locking position.

3. A leadthrough protection (1) according to claim 2, **characterized in that** the locking (13) is displaceable and is pretensioned in the direction of a locking position for locking (7) the locking element.

4. A leadthrough protection (1) according to one of the preceding claims, **characterized in that** the locking element (7) is displaceable from the storage position to the locking position and is pretensioned in the direction of the locking position.

5. A leadthrough protection (1) according to one of the preceding claims, **characterized by** a support (9) for arrangement on the inside of a wall (5) of the secure storage unit, with the support (9) acting as an abutment for the locking element (7) in the locking position.

6. A leadthrough protection (1) according to one of the preceding claims, **characterized in that** the locking element (7) closes the leadthrough (3) in a substantially air-tight manner in the locking position of the locking element (7).

7. A leadthrough protection (1) according to one of the preceding claims, **characterized by** an emergency locking apparatus (30) which during a movement of the locking element (7) from the storage position to the locking position triggers an emergency locking of a closeable opening (34) of the secure storage unit.

8. A secure storage unit, comprising a leadthrough (3) and a leadthrough protection (1) according to one of the claims 1 to 7.

9. A secure storage unit according to claim 8, **characterized by** an alarm apparatus which triggers an emergency locking of a closeable opening of the secure storage unit during a movement of the locking element (7) from the storage position to the locking position or during a removal of the leadthrough medium (20) from the leadthrough (3).

10. A secure storage unit according to claim 8 or 9, **characterized by** an emergency locking apparatus (30) which performs an emergency locking of a closeable opening (34) of the secure storage unit upon removal of the leadthrough medium (20) from the leadthrough (3).

11. A secure storage unit according to one of the preceding claims 9 and 10, **characterized in that** the leadthrough medium is a cable or a shaft.

12. A method for protecting a secure storage unit, comprising a leadthrough (3) with a leadthrough medium, **characterized by** the following steps:
- checking whether the leadthrough medium is removed from the leadthrough (3);
- triggering of a locking element (7) when determining that the leadthrough medium is being removed, so that the locking element (7) moves from a storage position to a locking position for locking the leadthrough (3).

13. A method according to claim 12, **characterized by** the triggering of an emergency locking of a closeable opening of the secure storage unit when determining that the leadthrough medium is being removed.

## Revendications

1. Protection de passage (1) pour un passage (3) dans un contenant pour objets de valeur avec un élément de barrage (7) qui peut être positionné dans une position de conservation et une position de barrage pour barrer le passage (3), dans lequel est disposé dans le passage (3) un élément traversant le passage sur lequel l'élément de barrage (7) repose dans la position de conservation de telle manière que l'élément de barrage (7) soit précontraint en direction de la position de barrage, **caractérisée en ce qu'**il comporte un mécanisme de déclenchement conçu pour déclencher un passage de l'élément de barrage (7) de la position de conservation à la position de barrage en cas de retrait d'un élément traversant le passage hors du passage (3).

2. Protection de passage (1) selon la revendication 1, **caractérisée en ce qu'**elle comporte un verrouillage (13) qui verrouille l'élément de barrage (7) dans la position de barrage.

3. Protection de passage (1) selon la revendication 2, **caractérisée en ce que** le verrouillage (13) est coulissant et précontraint en direction d'une position de verrouillage pour le verrouillage (7) de l'élément de barrage.

4. Protection de passage (1) selon l'une des revendications précédentes, **caractérisée en ce que** l'élément de barrage (7) peut coulisser de la position de conservation à la position de barrage et est précontraint en direction de la position de barrage.

5. Protection de passage (1) selon l'une des revendications précédentes, **caractérisée en ce qu'**elle comprend un appui (9) destiné à être disposé sur la face intérieure d'une paroi (5) du contenant pour objets de valeur, lequel appui (9) sert de contre-appui pour l'élément de barrage (7) dans la position de barrage.

6. Protection de passage (1) selon l'une des revendications précédentes, **caractérisée en ce que** l'élément de barrage (7) ferme le passage (3) de manière sensiblement étanche à l'air dans la position de barrage de l'élément de barrage (7).

7. Protection de passage (1) selon l'une des revendications précédentes, **caractérisé en ce qu'**il comporte un dispositif de barrage d'urgence (30) qui réalise un verrouillage d'urgence d'une ouverture refermable (34) du contenant pour objets de valeur en cas de déplacement de l'élément de barrage (7) de la position de conservation à la position de barrage.

8. Contenant pour objets de valeur avec un passage (3) et une protection de passage (1) selon l'une des revendications 1 à 7.

9. Contenant pour objets de valeur selon la revendication 8, **caractérisé en ce qu'**il comprend un dispositif d'alarme qui déclenche un verrouillage d'urgence d'une ouverture refermable du contenant pour objets de valeur en cas de mouvement de l'élément de barrage (7) de la position de conservation à la position de barrage ou lors du retrait de l'élément traversant le passage (20) hors de passage (3).

10. Contenant pour objets de valeur selon la revendication 8 ou 9, **caractérisé en ce qu'**il comprend un dispositif de barrage d'urgence (30), qui déclenche un verrouillage d'urgence d'une ouverture refermable (34) du contenant pour objets de valeur lors d'un retrait de l'élément traversant le passage (20) hors du passage (3).

11. Contenant pour objets de valeur selon l'une des revendications 9 à 10, **caractérisé en ce que** l'élément traversant le passage est un câble ou un arbre.

12. Procédé pour protéger un contenant pour objets de valeur avec un passage (3) avec un élément traversant le passage, **caractérisé en ce qu'**il comprend les étapes de:
- vérification du fait que l'élément traversant le passage a été ou non enlevé du passage (3),
- s'il est constaté que l'élément traversant le passage a été enlevé, déclenchement d'un élément de barrage (7), de telle manière que l'élément de barrage (7) passe d'une position de conservation à une position de barrage pour barrer le passage (3).

13. Procédé selon la revendication 12, **caractérisé en ce qu'**il comprend le déclenchement d'un verrouillage d'urgence d'une ouverture refermable du contenant pour objets de valeur s'il est constaté que l'élément traversant le passage a été enlevé.
